(19) Europäisches Patentamt
European Patent Office
Office européen des brevets

(11) Publication number: **0 157 486 B1**

(12) **EUROPEAN PATENT SPECIFICATION**

(45) Date of publication of patent specification: **06.05.92** (51) Int. Cl.$^{5}$: **C25D 13/00**, G02F 1/133

(21) Application number: **85301156.7**

(22) Date of filing: **21.02.85**

(54) **Method of manufacturing coloured members.**

(30) Priority: **28.02.84 JP 36785/84**

(43) Date of publication of application:
**09.10.85 Bulletin 85/41**

(45) Publication of the grant of the patent:
**06.05.92 Bulletin 92/19**

(84) Designated Contracting States:
**DE FR GB NL**

(56) References cited:
**DE-A- 2 940 789**
**GB-A- 2 009 991**

**JAPAN DISPLAY'83, 4th October 1983, pages 206-209, Tokyo, JP; M. SUGINOYA et al.: "Multicolor graphic LCD with tri-colored layers formed by electrodeposition"**

(73) Proprietor: **SEIKO INSTRUMENTS INC.**
**31-1, Kameido 6-chome Koto-ku**
**Tokyo 136(JP)**

(72) Inventor: **Kato, Naoki**
**6-31-1, Kameido Koto-ku**
**Tokyo(JP)**
Inventor: **Iwasa, Koji**
**6-31-1, Kameido Koto-ku**
**Tokyo(JP)**
Inventor: **Kamamori, Hitoshi**
**6-31-1, Kameido Koto-ku**
**Tokyo(JP)**
Inventor: **Suginoya, Mitsuru**
**6-31-1, Kameido Koto-ku**
**Tokyo(JP)**
Inventor: **Sano, Yutaka**
**6-31-1, Kameido Koto-ku**
**Tokyo(JP)**
Inventor: **Terada, Yumiko**
**6-31-1, Kameido Koto-ku**
**Tokyo(JP)**

(74) Representative: **Miller, Joseph et al**
**J. MILLER & CO. Lincoln House 296-302 High Holborn**
**London WC1V 7JH(GB)**

EP 0 157 486 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of manufacturing coloured members, and, although the invention is not so restricted, it relates more particularly to the manufacture of devices for which a high accuracy, a high degree of miniaturization and a coloured surface are required, such as a display element, or a coloured scale of a microscope.

The most convenient method of producing a coloured member is by printing. However,printing has the problems that location during multicolour printing is difficult, and a high accuracy and a fine pattern cannot be achieved. A colour filter having high accuracy and a very fine pattern, for use in a camera or the like, is therefore usually produced by photo-lithography. Although, however, photo-lithography provides a sufficiently high accuracy and fineness, a separate photo-lithographic process has to be carried out for each colour, and this makes the manufacture extremely complicated. In addition, there is a limit to the size of the substrate that can be handled, due to limits imposed on devices such as an aligner.

In Japan Display '83, 04.10.83, pages 206-209, Tokyo, Japan; M. Suginoya et al: "Multicolor graphic LCD with tri-colored layer formed by electrodeposition", there is disclosed a method of manufacturing a plurality of coloured members comprising forming at least one conductive film layer on a substrate of insulating material; and forming a coloured layer on the or each conductive film layer by electrodepositing colouring material and a polymer on the or each conductive layer.

According to the present invention, there is provided a method of manufacturing a plurality of coloured members comprising forming at least one conductive film layer on a substrate of insulating material; and forming a coloured layer on the or each conductive film layer by electrodepositing colouring material and a polymer on the or each conductive layer; and curing the polymer characterised in that the substrate is provided with at least one conductive film layer having respective pattern portions on opposite sides respectively of at least one dividing line, the or each conductive film layer also having at least one integral connector portion which electrically interconnects the respective pattern portions; electrodepositing the or each colour layer on its respective conductive film layer so that all the respective pattern portions and connector portions are given the same colour at the same time; the substrate thereafter being cut or otherwise divided along the or each dividing line so as to form a plurality of members each of which has a respective coloured pattern thereon.

The pattern portions on opposite sides of the said dividing line may be different from each other.

Alternatively, the pattern portions on opposite sides of a first dividing line are substantially the same as each other and are disposed on the same side of a second dividing line which is at right angles to the first dividing line, the said pattern portions being interconnected by a connector portion disposed on the side of the second dividing line opposite to that on which the said pattern portions are disposed.

The or each conductive layer preferably has a thickness not exceeding 3$\mu$ m.

Each said member may have a plurality of coloured layers which respectively differ from each other in colour. Thus in one way of carrying out the method of the present invention, the substrate provided with the conductive layers is immersed in a first electrodeposition bath and a selected conductive layer or layers is electrically energised so that a coloured layer of a first colour is formed on each selected conductive layer or layers, the substrate is removed from the first electrodeposition bath and is washed and baked, the substrate is then immersed in a second electrodeposition bath and a different conductive layer or layers is energised so that a coloured layer of a second colour is formed on the or each said different conductive layer, and the substrate is then removed from the second electrodeposition bath and is washed and baked, each said bath containing a respective colouring material and a polymer.

The said colouring material may be water-insoluble and may be a dye.

The polymer may be a negatively charged polymer.

The or each conductive layer may be made of $SnO_2$.

The invention is illustrated, merely by way of example, in the accompanying drawings, in which:-

Figure 1 is a perspective view showing a coloured member which has not itself been produced by the method of the present invention but which has been produced by a method some of whose features are used in the present invention;

Figures 2 and 3 are respectively a schematic plan view and a schematic sectional view showing stages in the manufacture of the coloured member shown in Figure 1, and

Figures 4 and 5 are respectively schematic plan views of embodiments of the present invention.

A method of forming a coloured layer by the electrodeposition of a polymer, which is an essential feature of the present invention, will now be described.

One means of electrodepositing a polymer on an electrode is to electrochemically polymerize a monomer on the electrode. As an example of such a method, it is reported that various vinyl compounds can be electrochemically polymerized on an iron sheet to obtain polymer films ("Metal Surface Technique", Vol. 19, No. 12, 1968). Intensive studies are now being made into electrochemically polymerizing pyrrole, thiophene or the like to form conductive polymers such as polypyrrole, polythienylene or the like on an electrode. However, this method of directly electrochemically polymerizing a monomer is not very efficient, and has the problem that the colour thereof cannot be selected as required.

Another method of electrodepositing a polymer onto an electrode is to make the polymer insoluble so that it precipitates onto the electrode from a polymer solution. Thus a method called "electrodeposition coating", in which a pigment is dispersed in an aqueous polymer solution, a metal piece is immersed in the solution to act as an electrode, and a coloured layer is electrodeposited on the metal, is known in industry and is used for the precoating of automobile bodies or the like.

The principle of this method is that a hydrophilic group such as a carboxyl group is introduced into a polymer, and it is then neutralized and made water-soluble by the use of an inorganic alkali, organic amine, or the like. The electrode is immersed in the aqueous solution of the polymer which is thus made water-soluble, and when a voltage is applied thereto, carboxyl anions that dissociate in the aqueous solution produce electrophoresis towards the anode and react with the protons generated by the electrolysis of water on the electrode, making the polymer insoluble and precipitating it. In other words, the reaction expressed by the formula below takes place at the anode, and the polymer is observed to precipitate thereat:

$$2H_2O \longrightarrow 4H^+ + O_2 \uparrow 4e^-$$

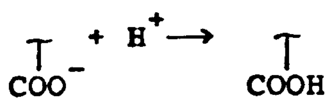

(precipitation)

If a basic group (e.g. a polyamine) is used as the hydrophilic group and the polymer is neutralized and made water-soluble, the precipitation of the polymer can be observed on the cathode instead.

If the polymer thus electrodeposited has an insulating property, it is believed that as the electrode is covered with the polymer, the current decreases gradually and prevents the electrode from being coated further, and no increase in film thickness can be expected. In practice, however, complete coating of the electrode in the initial stages is prevented by bubbles of nascent oxygen, and a certain film thickness can be obtained before the insulating layer is formed. In general, a film of between 10 to 20µm thick is obtained by electrodeposition with the application of 100 to 200V, but when a multicoloured surface member of high quality and having a very fine pattern is desired, the pattern spacing is only a few µm, so that fusion will occur between the lines of the pattern if the film is too thick. For this reason, the thinner the film, the better. In general, the thickness is desirably made less than 3µm and a preferred thickness is about 1µm. To obtain this thickness, it is necessary to set the resin concentration, the voltage, and the solvent composition to optimum values. The polymer film obtained in this manner has a low moisture content due to the effect of electric permeation, and is a uniform film with higher adhesion than a film obtained by coating or the like.

Since the colouring method disperses pigment in an aqueous polymer solution, the charged pigment produces electrophoresis together with the polymer and is taken into the film, and a coloured layer can be formed on the electrode.

Accordingly, if a conductive film is patterned as required by vacuum evaporation using a mask, sputtering or etching, the polymer and the pigment can be selectively electrodeposited onto the conductive portions to which a voltage is applied, and a coloured layer devoid of any displacement from the desired pattern position can be formed. Multicoloured layers can be formed easily by repeating the process, because no coloured layer is formed on the portions on which electrodeposition has already been applied.

The present invention utilizes the ability of this method to produce a multicoloured surface member by electrodeposition in that it can provide an extremely uniform coloured layer, irrespective of the size of the substrate. In other words, after conductive layers of a plurality of patterns have been formed on the substrate and coloured layers have been simultaneously formed by electrodeposition, the substrate is cut into parts each of which has the required pattern, so that a plurality of multicoloured surface members can be obtained with an extremely high producibility and at low manufacturing cost.

Figures 1-3 illustrate a method which is not in accordance with the present invention but some features of which are used in the present invention.

There were manufactured a plurality of light-transmissive members M each of which was as shown in Figure 1. Each light-transmissive member M comprised a substrate 1 of insulating material on which was formed a stripe pattern 2 consisting of a sequence of 200 $\mu$ m wide red (R), green (G) and blue (B) lines.

The manufacturing method employed will be described in detail below.

(1) Patterning Proces:

As shown in Figures 2 and 3, each light-transmissive member M was formed by cutting a member M' into two parts. The member M' comprised a transparent substrate 1 made of a glass insulating material. The original size of the substrate 1 was twice that of the substrate of each of two desired multicoloured surface members M which were ultimately to be formed by cutting the substrate 1 into two parts. A transparent, conductive tin oxide film was formed on the transparent substrate 1 by spray coating, and was then etched to form a plurality of strips 3, 3' each having a width of 200$\mu$m, as shown in Figure 2. The strips 3, 3', each of which thus constituted a conductive film layer, were symmetrically arranged in patterns 2 on opposite sides of a line $\ell$.

(2) Electrodeposition Process:

An electrodeposition bath of the following composition was prepared using a paint ("S-Via ED-3000", a product of Jinto Paint K.K.) of the following composition

S-Via ED-3000

| | |
|---|---|
| Water-soluble polyester resin<br>Water-soluble melamine resin | 70% by weight |
| Butyl Cellosolve<br>Ethyl Cellosolve<br>n-Butanol | 30% by weight |

| Electrodeposition bath: Material | Parts by weight |
|---|---|
| S-Via ED-3000 | 8 |
| Water | 120 |
| Methyl Cellosolve | 12 |
| Dye | x |

The dyes used were limited to those which were soluble in methyl cellosolve used as a hydrophilic solvent, and the upper limit of the dye weight ratio x was determined by the solubility of the dye. In other words, in order to obtain a high colour density, it is necessary that x is large and that the solubility of the dye in methyl cellosolve is also large. Preferred dyes are oil colours of a metal complex salt structure soluble in the hydrophilic solvent. The dyes have a high solubility in the hydrophilic solvent and an extremely high light fasteness. (Examples include those with trademarks like Aizen Spilon, Oleosol Fast,

Neo Zapon, Valifast, etc.). A typical example thereof has the following molecular structure.

$C_r$ complex salt of

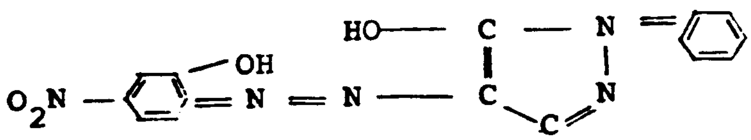

Colour index No. Solvent Red 8.

The bath was prepared in the following manner. First the S-Via ED-3000 was dissolved in water, the methyl cellosolve in which the dye was dissolved was added to the aqueous solution, and the dye was uniformly dispersed therein. The methyl cellosolve functioned as a dispersion medium in this case. If the quantity thereof added was too great or if there were too many carbon atoms of the alkyl group of the cellosolve, however, the film would become too thick and non-uniform.

The transparent substrate 1 on which the transparent conductive films or strips 3, 3' were formed was then immersed in the electrodeposition bath prepared in the manner described above. Those strips 3, 3' which were to form electrodes of the same colour were selected, and a voltage of 10 to 40V was applied for three minutes between the selected electrodes as the anode and an opposite electrode. In this case, a large current flowed immediately after the application of power, but this current decreased gradually and finally approached zero. After the application of power was over, the transparent substrate 1 was removed from the bath, and was then washed with water. Any solution adhering to the portions to which the voltage was not applied was washed off. After washing with water, the substrate was dried, leaving a coloured layer 4 with a high degree of transparency formed on each of the electrodes 3, 3' to which the voltage had been applied.

(3) Curing Process:

Next, the polyester resin and melamine resin in the coloured layer 4 formed by the electrodeposition on each of the electrodes 3, 3' to which the voltage had been applied were subjected to a polycondensation reaction and were cured by baking. Baking was effected at 175°C for 30 minutes in air so as to cure the resins sufficiently. In order to further improve the fastness of the coloured layers 4, however, the baking time can be extended, or the baking can be done at a reduced pressure. After curing, the coloured layer 4 on each electrode 3, 3' was 1.5 µm thick.

Each cured coloured layer 4 was an efficient insulating layer and was not electrodeposited or dyed again, even when reimmersed in the electrodeposition bath. When second and subsequent coloured layers were to be formed, therefore, the transparent electrodes which were to be coloured another colour were selected, and the electrodeposition and curing were repeated in an electrodeposition bath of a different colour (see Figure 3).

Thus, for example, in order to form the members M shown in Figure 1, the substrate 1 provided with the conductive layers 3, 3' may be immersed in a first electrodeposition bath having a red colouring material therein. Those conductive layers 3, 3' which are to be coloured red are then electrically energised so that each of them is covered with a red coloured layer 4. The substrate 1 is then removed from the first electrodeposition bath and is washed and baked, and the substrate 1 is then immersed in a second electrodeposition bath having a green colouring material therein. Those conductive layers 3, 3' which are to be coloured green are then electrically energised so that each of them is covered with a green coloured layer 4. The substrate 1 is then removed from the second electrodeposition bath and is washed and baked. The substrate 1 is then subsequently immersed in a third electrodeposition bath containing a blue colouring material to produce the blue coloured layers 4.

(4) Cutting Process:

After the coloured layers 4 were formed, the transparent substrate 1 was cut along the line ℓ of Figures 2 and 3 so as to form two members M.

The production steps described above can provide two identical coloured surface members M by a single electrodeposition step. When four or nine members M are to be produced from the same substrate by the same steps, four or nine identical coloured or multicoloured surface members can be obtained, respectively.

## Embodiment 1

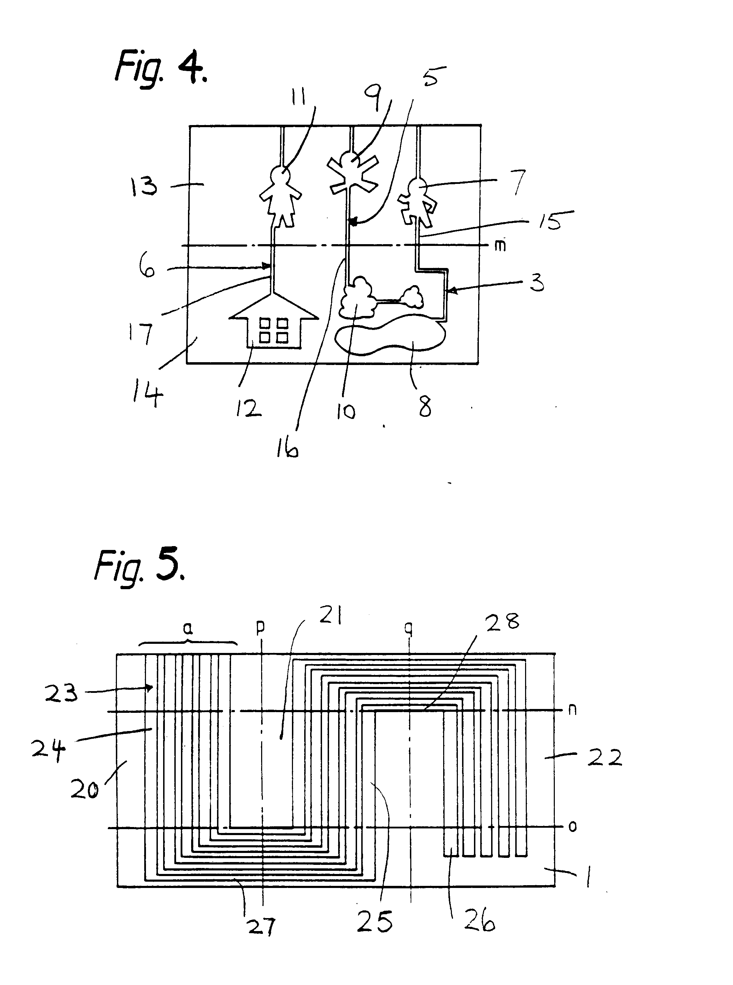

Two different transparent conductive film patterns, as shown in Figure 4, were formed by short-circuiting patterns which were to be coloured in the same colour. Thereafter, coloured layers were formed in the same way as described above with reference to Figures 1-3, and the substrate was cut along a line m to form two different multicoloured surface members.

In this case, since the number of the power terminals for the electrodeposition can be the same as that used when manufacturing multicoloured surface members of the same pattern, two different multicoloured surface members could be produced simultaneously and more conveniently.

As will be appreciated, in the Figure 4 embodiment, the substrate is provided with conductive film layers 3, 5, 6 which have respective pattern portions 7, 8; 9,10; 11, 12 on opposite sides respectively of the dividing line m. The conductive film layers 3, 5, 6 also have respective connector portions 15, 16, 17 which electrically interconnect the respective pattern portions 7, 8; 9, 10; 11,12. Each coloured layer 4 (not shown in Figure 4) is electrodeposited on the respective conductive film layer 3,5,6 so that all the respective pattern portions 7, 8; 9,10 and 11,12 and the corresponding connector portions 15; 16; 17 are given the same colour at the same time, the substrate thereafter being cut or otherwise divided along the dividing line m so as to form a plurality of members 13, 14 having different pattern portions 7, 8; 9,10; 11,12 on opposite sides of the dividing line m.

## Embodiment 2

After the patterns of a transparent conductive film were formed as shown in Figure 5, coloured layers were formed in the same way as described above with reference to Figures 1-3, using a terminal a portion of the conductive film as a power terminal for the electrodeposition. The substrate was then cut along lines n, o, p and q, so that three multicoloured surface members 20, 21, 22 were simultaneously produced, each having a substantially similar pattern thereon. In this case, since the number of power terminals for the electrodeposition can be the same as that used when manufacturing multicoloured surface members of a single pattern, multicoloured surface members having striped patterns could be produced more conveniently.

As will be appreciated, in the Figure 5 embodiment, a plurality of conductive film layers 23 are formed on the substrate 1, each conductive film layer 23 having respective pattern portions 24, 25, 26 which are the same as each other, the pattern portions 24, 25 being on opposite sides respectively of the vertical dividing line p, and the pattern portions 25, 26 being on opposite sides respectively of the vertical dividing line q. Each conductive film layer, moreover, has a connector portion 27 which electrically interconnects the pattern portions 24, 25 and a connector portion 28 which electrically interconnects the pattern portions 25, 26. The pattern portions 24, 25 are on the same side (i.e. above) the horizontal dividing line o which is at right angles to the vertical dividing lines p,q, while the pattern portions 25, 26 are on the same side (i.e. below) the horizontal dividing line n which is at right angles to the vertical dividing lines p, q. The pattern portions 24,25 are interconnected by the connector portion 27 which is disposed on the opposite side (i.e. below) the dividing line o, while the pattern portions 25, 26 are interconnected by the connector portion 28 which is disposed on the opposite side (i.e. above) the dividing line n. Thus when each of the conductive film layers 23 has its colour layer electrodeposited thereon, all the respective pattern portions 24, 25, 26 and connector portions 27, 28 will be given the same colour at the same time. Moreover, when the substrate is thereafter cut or otherwise divided along the dividing lines n,o,p q, each of the members 20, 21, 22 which will be obtained will have a similar pattern thereon.

As described above, in a method of manufacturing a multicoloured surface member by forming coloured layers by electrodeposition, the present invention pays specific attention to the fact that this method provides an extremely uniform coloured layer, irrespective of substrate size. Therefore the present invention enables the formation of a conductive layer for electrodeposition of a plurality of patterns on the same substrate, the simultaneous formation of coloured layers by electrodeposition, and then the cutting of the substrate. Accordingly a plurality of multicoloured surface members can be produced by a single manufacturing process, and hence a substantial improvement in the producibility and the reduction of the

cost of production can be obtained. The application of the present invention to the provision of multicoloured display elements, optical colour separation means such as camera tubes, or the like is therefore to be expected.

## Claims

1. A method of manufacturing a plurality of coloured members (13,14) comprising forming at least one conductive film layer (3,5,6) on a substrate (1) of insulating material; and forming a coloured layer (4) on the or each conductive film layer (3,5,6) by electrodepositing colouring material and a polymer on the or each conductive layer (3,5,6); and curing the polymer characterised in that the substrate (1) is provided with at least one conductive film layer (3,5,6) having respective pattern portions (7,8; 9,10; 11,12) on opposite sides respectively of at least one dividing line (m), the or each conductive film layer (3,5,6) also having at least one integral connector portion (15;16;17) which electrically interconnects the respective pattern portions (7,8; 9,10; 11,12); electrodepositing the or each colour layer (4) on its respective conductive film layer (3.5,6) so that all the respective pattern portions (7,8; 9,10; 11,12) and connector portions (15;16;17) are given the same colour at the same time; the substrate (1) thereafter being cut or otherwise divided along the or each dividing line (m) so as to form a plurality of members (13,14) each of which has a respective coloured pattern thereon.

2. A method as claimed in claim 1 characterised in that the pattern portions (7,8; 9,10; 11,12) on opposite sides of the said dividing line (m) are different from each other.

3. A method as claimed in claim 1 characterised in that the pattern portions (24,25) on opposite sides of a first dividing line (p) are substantially the same as each other and are disposed on the same side of a second dividing line (o) which is at right angles to the first dividing line (p), the said pattern portions (24,25) being interconnected by a connector portion (27) disposed on the side of the second dividing line (o) opposite to that on which the said pattern portions (24,25) are disposed.

4. A method as claimed in any preceding claim characterised in that the or each conductive layer (3,5,6) has a thickness not exceeding 3$\mu$m.

5. A method as claimed in any preceding claim characterised in that each said member (13,14) has a plurality of coloured layers (4) which respectively differ from each other in colour.

6. A method as claimed in claim 5 characterised in that the substrate (1) provided with the conductive layers (3,5,6) is immersed in a first electrodeposition bath and a selected conductive layer or layers is electrically energised so that a coloured layer of a first colour (7,8) is formed on each selected conductive layer or layers; the substrate (1) is removed from the first electrodeposition bath and is washed and baked; the substrate (1) is then immersed in a second electrodeposition bath and a different conductive layer or layers is energised so that a coloured layer (9,10) of a second colour is formed on the or each said different conductive layer; and the substrate is then removed from the second electrodeposition bath and is washed and baked; each said bath containing a respective colouring material and a polymer.

7. A method as claimed in any preceding claim characterised in that the said colouring material is water-insoluble.

8. A method as claimed in any preceding claim characterised in that the said colouring material is a dye.

9. A method as claimed in any preceding claim characterised in that the polymer is a negatively charged polymer.

10. A method as claimed in any preceding claim characterised in that the or each conductive layer is made of $SnO_2$.

## Revendications

1. Un procédé de fabrication d'un ensemble d'éléments colorés (13, 14), comprenant la formation d'au moins une couche mince conductrice (3, 5, 6) sur un substrat (1) en un matériau isolant; et la formation d'une couche colorée (4) sur la couche mince conductrice ou sur chacune d'elles (3, 5, 6), par électrodéposition d'une matière colorante et d'un polymère sur la couche conductrice ou chacune d'elles (3, 5, 6); et la cuisson du polymère par étuvage, caractérisé en ce qu'on forme sur le substrat (1) au moins une couche mince conductrice (3, 5, 6) ayant des parties de motif respectives (7, 8; 9, 10; 11, 12) situées respectivement de part et d'autre d'au moins une ligne de séparation (m), la couche mince conductrice, ou chacune d'elles (3, 5, 6) ayant également au moins une partie de connexion (15; 16; 17) faisant partie intégrante de la couche, qui interconnecte électriquement les parties de motif respectives (7, 8; 9, 10; 11, 12); on forme la couche colorée ou chacune d'elles (4), par électrodéposition sur sa couche mince conductrice respective (3, 5, 6), de façon à donner la même couleur au même moment à toutes les parties de motif respectives (7, 8; 9, 10; 11, 12) et aux parties de connexion (15; 16;, 17); et ensuite on coupe ou on divise de toute autre manière le substrat (1) selon la ligne de séparation ou chacune d'elles (m), de façon à former un ensemble d'éléments (13, 14) sur chacun desquels se trouve un motif coloré respectif.

2. Un procédé selon la revendication 1, caractérisé en ce que les parties de motif (7, 8; 9, 10; 11, 12) qui sont situées de part et d'autre de la ligne de séparation (m) sont mutuellement différentes.

3. Un procédé selon la revendication 1, caractérisé en ce que les parties de motif (24, 25) qui se trouvent de part et d'autre d'une première ligne de séparation (p) sont pratiquement identiques les unes aux autres, et sont disposées du même côté d'une seconde ligne de séparation (o) qui est perpendiculaire à la première ligne de séparation (p), et ces parties de motif (24, 25) sont interconnectées par une partie de connexion (27) qui est disposée du côté de la seconde ligne de séparation (o) qui est opposé à celui sur lequel sont disposées les parties de motif précitées (24, 25).

4. Un procédé selon l'une quelconque des revendications précédentes, caractérisé en ce que la couche conductrice ou chacune d'elles (3, 5, 6) a une épaisseur qui ne dépasse pas 3 $\mu$m.

5. Un procédé selon l'une quelconque des revendications précédentes, caractérisé en ce que chaque élément (13, 14) comporte un ensemble de couches colorées (4) qui ont des couleurs respectives mutuellement différentes.

6. Un procédé selon la revendication 5, caractérisé en ce qu'on immerge dans un premier bain d'électrodéposition le substrat (1) portant les couches conductrices (3, 5, 6), et on met sous tension une couche ou plusieurs couches conductrices sélectionnées, de façon qu'une couche colorée d'une première couleur (7, 8) se forme sur chacune des couches conductrices sélectionnées; on retire le substrat (1) du premier bain d'électrodéposition et on le lave et on l'étuve; on immerge ensuite le substrat (1) dans un second bain d'électrodéposition, et on met sous tension une couche ou plusieurs couches conductrices différentes, de façon qu'une couche colorée (9, 10) d'une seconde couleur se forme sur la couche conductrice différente ou sur chacune d'elles; et on retire ensuite le substrat du second bain d'électrodéposition et on le lave et on l'étuve; chaque bain contenant une matière colorante respective et un polymère.

7. Un procédé selon l'une quelconque des revendications précédentes, caractérisé en ce que la matière colorante précitée est insoluble dans l'eau.

8. Un procédé selon l'une quelconque des revendications précédentes, caractérisé en ce que la matière colorante est un colorant.

9. Un procédé selon l'une quelconque des revendications précédentes, caractérisé en ce que le polymère est un polymère chargé négativement.

10. Un procédé selon l'une quelconque des revendications précédentes, caractérisé en ce que la couche conductrice ou chacune d'elles consiste en $SnO_2$.

## Patentansprüche

1. Verfahren zur Herstellung einer Vielzahl von gefärbten Elementen (13, 14), bei dem wenigstens eine leitende Filmschicht (3, 5, 6) auf einem Substrat (1) aus isolierendem Material hergestellt wird, auf der oder den leitenden Filmschichten (3, 5, 6) eine gefärbte Schicht (4) durch galvanische Abscheidung von färbendem Material und einem Polymer auf der oder den leitenden Schichten (3, 5, 6) gebildet wird und das Polymer mittels Wärme ausgehärtet wird, **dadurch gekennzeichnet**, daß das Substrat mit wenigstens einer leitenden Filmschicht (3, 5, 6) mit jeweils einem entsprechenden Rasterteil (7, 8; 9, 10; 11, 12) auf gegenüberliegenden Seiten wenigstens einer Teilungslinie (m) versehen wird, wobei der oder die leitenden Filmschichten (3, 5, 6) wenigstens ein integrales Verbindungsteil (15; 16; 17) besitzen, das die entsprechenden Rasterteile (7, 8; 9, 10; 11, 12) elektrisch miteinander verbindet, daß die oder jede färbende Schicht (4) galvanisch auf ihrer entsprechenden leitenden Filmschicht (3, 5, 6) so abgeschieden wird, daß die entsprechenden Rasterteile (7, 8; 9, 10; 11, 12) und Verbindungsteile (15; 16; 17) gleichzeitig die gleiche Farbe erhalten, und daß das Substrat (1) danach längs der oder jeder Teilungslinie (m) so geschnitten oder anderweitig geteilt wird, daß eine Vielzahl von Elementen (13, 14) entsteht, auf denen jeweils ein entsprechendes gefärbtes Raster vorhanden ist.

2. Verfahren nach Anspruch 1, **dadurch gekennzeichnet**, daß die Rasterteile (7, 8; 9, 10; 11, 12) auf gegenüberliegenden Seiten der Teilungslinie (m) voneinander verschieden sind.

3. Verfahren nach Anspruch 1, **dadurch gekennzeichnet**, daß die Rasterteile (24, 25) auf gegenüberliegenden Seiten einer ersten Teilungslinie (p) einander gleich und auf der gleichen Seite einer zweiten Teilungslinie (o) angeordnet sind, welche senkrecht auf der ersten Teilungslinie (p) steht, und daß die Rasterteile (24, 25) durch ein Verbindungsteil (27) miteinander verbunden sind, das auf der Seite der zweiten Teilungslinie (o) angeordnet ist, welche der Seite, auf der die Rasterteile (24, 25) angeordnet sind, gegenüberliegt.

4. Verfahren nach den vorhergehenden Ansprüchen, **dadurch gekennzeichnet**, daß die oder die leitenden Schichten (3, 5, 6) eine 3 $\mu$m nicht überschreitende Dicke besitzen.

5. Verfahren nach den vorhergehenden Ansprüchen, **dadurch gekennzeichnet**, daß die Elemente (13, 14) eine Vielzahl von gefärbten Schichten (4) aufweisen, welche sich farblich voneinander unterscheiden.

6. Verfahren nach Anspruch 5, **dadurch gekennzeichnet**, daß das mit den leitenden Schichten (3, 5, 6) versehene Substrat (1) in ein erstes galvanisches Bad eingetaucht wird und eine ausgewählte leitende Schicht bzw. ausgewählte leitende Schichten elektrisch so erzeugt werden, daß eine gefärbte Schicht einer ersten Farbe (7, 8) auf jeder ausgewählten leitenden Schicht bzw. ausgewählten leitenden Schichten gebildet wird, daß das Substrat (1) aus dem ersten galvanischen Bad entnommen, gewaschen und erwärmt wird, daß das Substrat (1) sodann in ein zweites galvanisches Bad getaucht wird und eine andere leitende Schicht bzw. andere leitende Schichten so erzeugt werden, daß eine gefärbte Schicht (9, 10) einer zweiten Farbe auf der anderen bzw. den anderen leitenden Schichten gebildet wird, und daß das Substrat sodann aus dem zweiten galvanischen Bad entnommen, gewaschen und erhitzt wird, wobei jedes Bad ein entsprechendes färbendes Material und ein Polymer enthält.

7. Verfahren nach den vorhergehenden Ansprüchen, **dadurch gekennzeichnet**, daß das färbende Material in Wasser nicht löslich ist.

8. Verfahren nach den vorhergehenden Ansprüchen, **dadurch gekennzeichnet**, daß das färbende Material ein Farbstoff ist.

9. Verfahren nach den vorhergehenden Ansprüchen, **dadurch gekennzeichnet**, daß das Polymer ein negativ geladenes Polymer ist.

10. Verfahren nach den vorhergehenden Ansprüchen, **dadurch gekennzeichnet**, daß die leitende Schicht bzw. die leitenden Schichten aus $SnO_2$ hergestellt sind.

Fig.1.

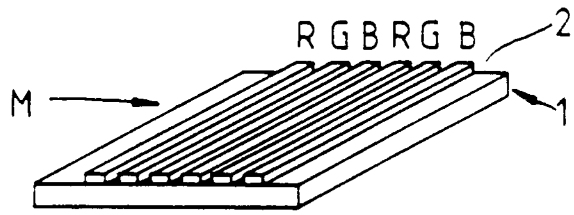


Fig.2.

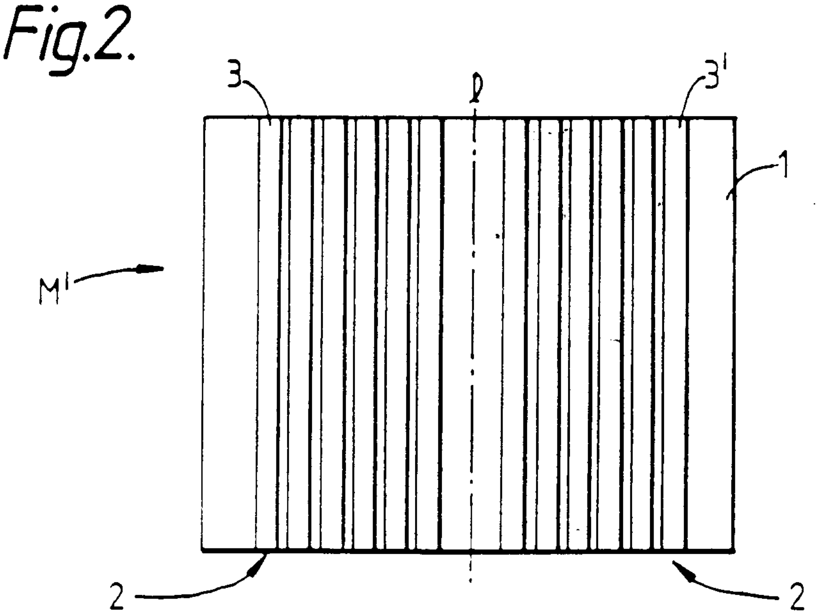


Fig.3.

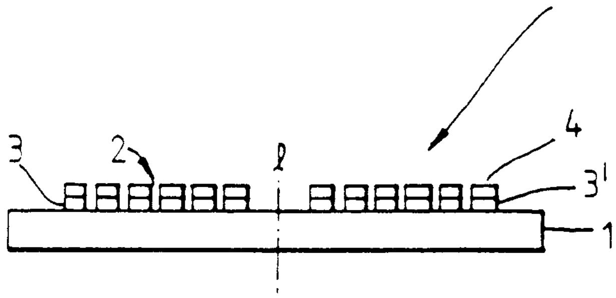

Fig. 4.

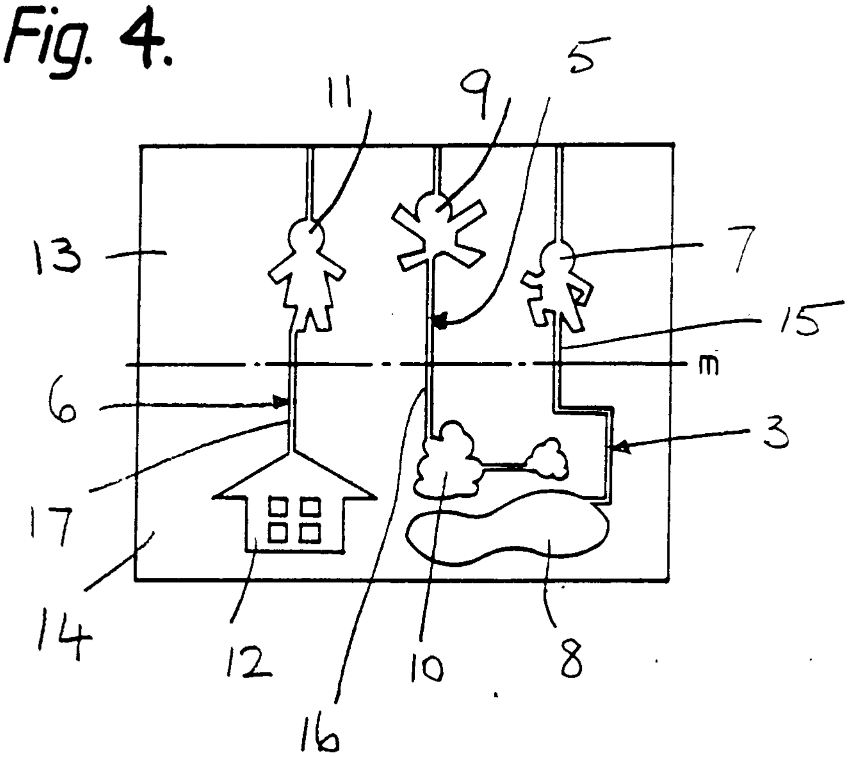


Fig. 5.